(19) Europäisches Patentamt European Patent Office Office européen des brevets

(11) **EP 2 953 096 B1**

(12) **EUROPEAN PATENT SPECIFICATION**

(45) Date of publication and mention
of the grant of the patent:
**30.01.2019 Bulletin 2019/05**

(51) Int Cl.:
**G06T 7/521** *(2017.01)* **G06T 7/593** *(2017.01)*

(21) Application number: **15170197.6**

(22) Date of filing: **02.06.2015**

(54) **INFORMATION PROCESSING DEVICE, INFORMATION PROCESSING METHOD, SYSTEM AND CARRIER MEANS**

INFORMATIONSVERARBEITUNGSVORRICHTUNG, INFORMATIONSVERARBEITUNGSVERFAHREN, -SYSTEM UND -TRÄGERMITTEL

DISPOSITIF DE TRAITEMENT D'INFORMATIONS, PROCEDE DE TRAITEMENT D'INFORMATIONS, SYSTEME ET MOYEN DE TRANSPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2014 JP 2014114711**
**29.07.2014 JP 2014154223**

(43) Date of publication of application:
**09.12.2015 Bulletin 2015/50**

(73) Proprietor: **Ricoh Company, Ltd.**
**Tokyo 143-8555 (JP)**

(72) Inventors:
• **Sekiguchi, Hiroyoshi**
**Ohta-ku, Tokyo 143-8555 (JP)**
• **Nagashima, Kenji**
**Ohta-ku, Tokyo 143-8555 (JP)**

(74) Representative: **White, Duncan Rohan et al**
**Marks & Clerk LLP**
**Fletcher House (2nd Floor)**
**Heatley Road**
**The Oxford Science Park**
**Oxford OX4 4GE (GB)**

(56) References cited:
**US-A- 6 137 491        US-A1- 2010 091 301**
**US-A1- 2011 242 283**

**Description**

BACKGROUND

Technical Field

Example embodiments of the present invention relate to an information processing device, an information processing method, system, and a carrier means.

Background Art

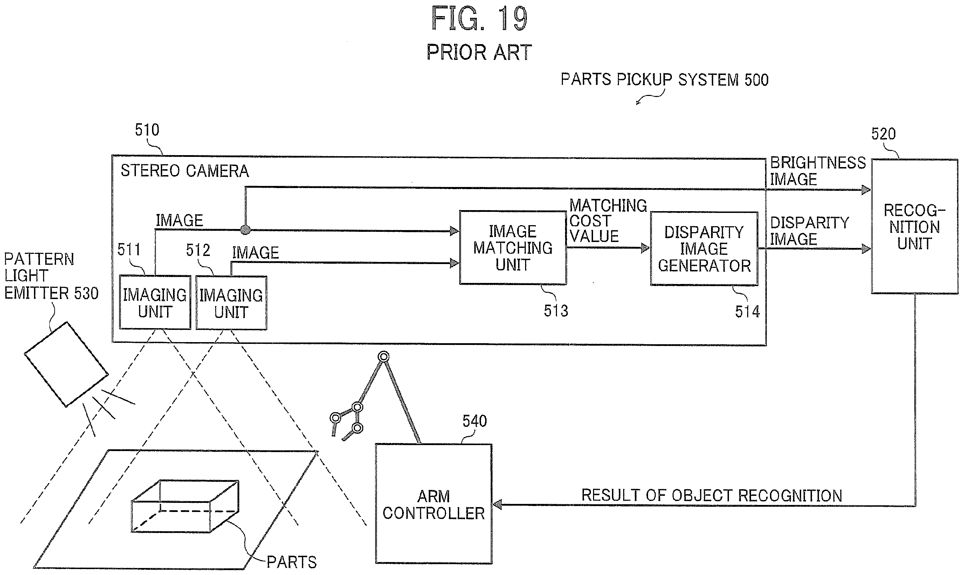

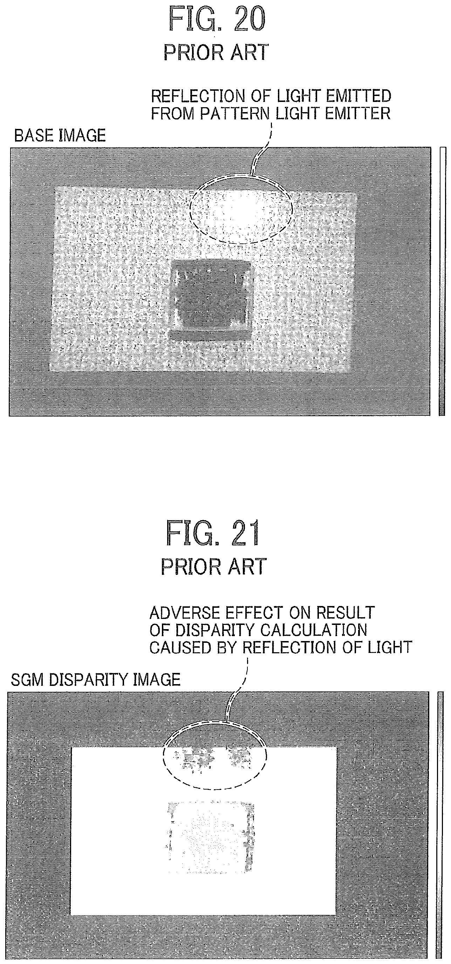

Conventionally, a parts pickup system 500, as illustrated in FIG. 19, that is used, for example, for picking up parts at the factory is known. The parts pickup system 500 captures a plurality of images of parts with a little texture to calculate a disparity, and then performs object recognition processes for the parts according to the calculated disparity. Here, the term "texture" indicates, for example, patterns, colors, and dots due to the variations of light and shade of the pixels of an image.
More specifically, as illustrated in FIG. 19 for example, the parts pickup system 500 is known in the art in which a stereo camera 510 obtains images using imaging units 511 and 512, calculates a cost value by searching and matching corresponding pixels in the obtained images using an image matching unit 513, and calculates a disparity for each of the pixels using a disparity image generator 514. A recognition unit 520 recognizes parts based on a brightness image and a disparity image. An arm controller 540 controls an arm that picks up the parts that are recognized according to the results of the object recognition performed by the recognition unit 520.
Assuming that the image captured by the imaging unit 511 is a base image, when a comparison image whose peripheral pixels have a little texture with reference to the corresponding pixels of the base image is searched and matching is performed, similar pixels tend to lie next to each other. For this reason, it is difficult to match corresponding pixels, and it is difficult to obtain a desired disparity (such a desired disparity will be referred to as correct disparity in the following description).
For example, JP-2013-190394-A discloses the technology to improve the accuracy of disparity calculation by performing matching for the images of an object onto which various kinds of patterns have been projected by a pattern light emitter 530, as illustrated in FIG. 19.
However, in such a technology with which the accuracy of disparity calculation is improved by using the pattern light emitter 530 as illustrated in FIG. 19, the reflection of light emitted from the pattern light emitter 530 is captured by the imaging unit 511 or the imaging unit 512 of the stereo camera 510 when the arrangement of the pattern light emitter 530 is not ideal (see FIG. 20). Such reflection of light causes adverse effects on the result of disparity calculation (see FIG. 21). Moreover, the provision of the pattern light emitter 530 increases the size of the parts pickup system 500, and the total man-hour count and cost to manufacture the parts pickup system 500 increase. Moreover, due to the difference in the returning patterns of illumination light to the imaging units after the pattern lighting is reflected from an object such as acrylic parts or metallic parts whose brightness value or tone varies due to specular reflection, a difference in brightness is caused in the corresponding pixels of the image data obtained by the imaging units. As a result, the accuracy of the matching of pixels decreases significantly, and the disparities calculated for the pixels of an object area deviate from correct disparities.
The present invention has been made in view of such circumstances, and aims at providing an information processing device capable of calculating disparities of an object with a little texture in a precise manner without projecting pattern lighting.
US6137491A and US2010/091301A disclose an information processing device including two or more imaging units configured to capture an object to obtain two or more captured images, a pattern superimposition unit configured to superimpose a pattern image on the two or more captured images obtained by the two or more imaging units, and a disparity image generator configured to generate a disparity image of the object based on the captured images on which the pattern image is superimposed by the pattern superimposition unit.
The present invention is in the apparatus of claim 1 and the method of claim 10. Disparities of an object with a little texture can be calculated in a precise manner without projecting pattern lighting.

BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a schematic diagram of the configuration of a pickup system for which an information processing device is provided, according to an example embodiment of the present invention.

FIG. 2 is a block diagram of the hardware configuration of a stereo camera according to an example embodiment of the present invention.

FIG. 3 is a functional block diagram of an information processing device according to an example useful for understanding the present invention.

FIG. 4 is a block diagram of the processing of the image matching unit and the SGM disparity image generator of FIG. 3, according to an example useful for understanding the the present invention.

FIG. 5 is a schematic diagram of the calculation of decimal disparities performed by the decimal-disparity calculator of FIG. 4, according to an example useful for understanding the present invention.

FIG. 6 is a functional block diagram of the information processing device of FIG. 3 to which an area detector is added, according to an example embodiment of the present invention.

FIG. 7 is a functional block diagram of the information processing device of FIG. 6 to which a preprocessor is added, according to an example embodiment of the present invention.

FIG. 8 is a schematic diagram of the principles of distance measuring according to an example embodiment of the present invention.

FIGS. 9A and 9B are diagrams of the calculation of an amount of shift according to an example embodiment of the present invention.

FIG. 10 is a graph in which the cost value is indicated for each degree of amount of shift, according to an example embodiment of the present invention.

FIG. 11 is a schematic diagram of the calculation of a synthesis-cost value according to an example embodiment of the present invention.

FIG. 12 is a graph in which the synthesis-cost value is indicated for each degree of disparity value, according to an example embodiment of the present invention.

FIG. 13 is a graph in which synthesis-cost values with pattern superimposition are compared with synthesis-cost values without pattern superimposition, according to an example embodiment of the present invention.

FIG. 14 is a schematic diagram of a background disparity that is calculated by a pickup system in advance, according to an example embodiment of the present invention.

FIGS. 15A and 15B are schematic diagrams of an example of pattern superimposition according to an example embodiment of the present invention.

FIG. 16 is an example of base image captured in a pickup system according to an example embodiment of the present invention.

FIG. 17 is an example of a disparity image obtained by superimposing on the base image of FIG. 16 a pattern according to an example embodiment of the present invention.

FIG. 18 is a flowchart of the processing according to an example embodiment of the present invention.

FIG. 19 is a schematic diagram of the configuration of a pickup system for which a conventional pattern light emitter is provided.

FIG. 20 is an example of base image captured by the pickup system of FIG. 19.

FIG. 21 is an example of disparity image obtained by emitting pattern light on the base image of FIG. 20.

FIG. 22 is a magnified view of a case where a stereo camera is provided with three imaging units, according to an example embodiment of the present invention.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

An information processing device according to an example embodiment of the present invention is described below with reference to the accompanying drawings. However, no limitation is indicated thereby, and various applications and modifications may be made without departing from the scope of the invention as defined by the appended claims. In the drawings, like reference signs denote like elements, and overlapping description may be simplified or omitted as appropriate.

In the information processing device according to the present example embodiment, for example, image processing is performed to superimpose a pattern image on the background of the two images captured by a stereo camera, and matching processes are performed between the two images. Moreover, semi-global matching (SGM) algorithms are adopted in the information processing device according to the present example embodiment. In other words, images whose backgrounds are superimposed with a prescribed pattern image are adopted in the present example embodiment instead of adopting a pattern light emitter that projects a prescribed pattern lighting onto parts as illustrated in FIG. 19, and a disparity image is obtained using, for example, SGM algorithms.

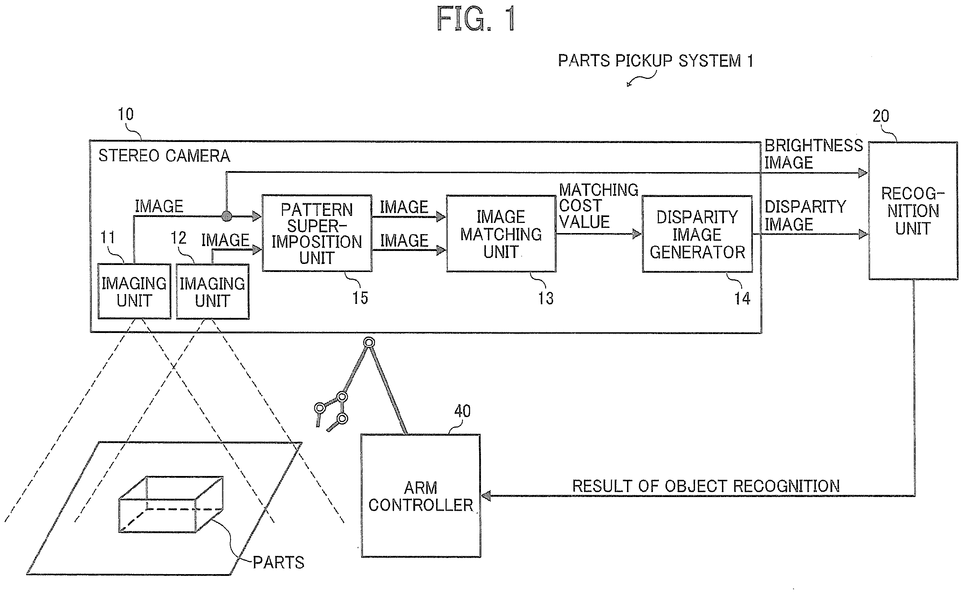

A pickup system that includes a stereo camera for which the information processing function capability according to the present example embodiment is provided is described below with reference to FIG. 1. As a matter of course, the information processing capability according to the present example embodiment is not limited to the application to pickup systems, but may be applied to the acquisition of a disparity image in the technical field where stereo cameras are used.

A stereo camera for which the information processing function capability according to the present example embodiment is provided is described below, but no limitation is indicated thereby. For example, a stereo camera may be provided with minimum configuration such as an imaging unit to capture an image, and an information processing device, for example, a personal computer (PC), that is physically separate from the stereo camera may be provided with the information processing capability according to the present example embodiment.

An outline of the parts pickup system 1 according to the present example embodiment is described below with reference to FIG. 1. The parts pickup system 1 according to the present example embodiment includes a stereo camera 10, a recognition unit 20, and an arm controller 40.

The stereo camera 10 that captures parts includes imaging units 11 and 12, a pattern superimposition unit 15, an image matching unit 13, and a disparity image generator 14. Note that the number of the imaging units is not limited to two, but may be equal to or greater than three.

The pattern superimposition unit 15 superimposes a pattern image on the two images captured by the imaging units 11 and 12. The pattern image will be described later in detail.

The image matching unit 13 calculates, for example, a cost value that indicates the level of dissimilarity in brightness value for each pixel of the captured image on which a pattern image has been superimposed. The calculation of cost value will be described later in detail.

The disparity image generator 14 generates a disparity image of parts based on the two captured images on which a pattern image has been superimposed by the pattern superimposition unit 15. The generation of a disparity image will be described later in detail.

The recognition unit 20 recognizes parts based on the comparison between the brightness image obtained by imaging units and the disparity image generated by the disparity image generator 14.

The arm controller 40 controls an arm that picks up parts, in response to a result of the object recognition performed by the recognition unit 20.

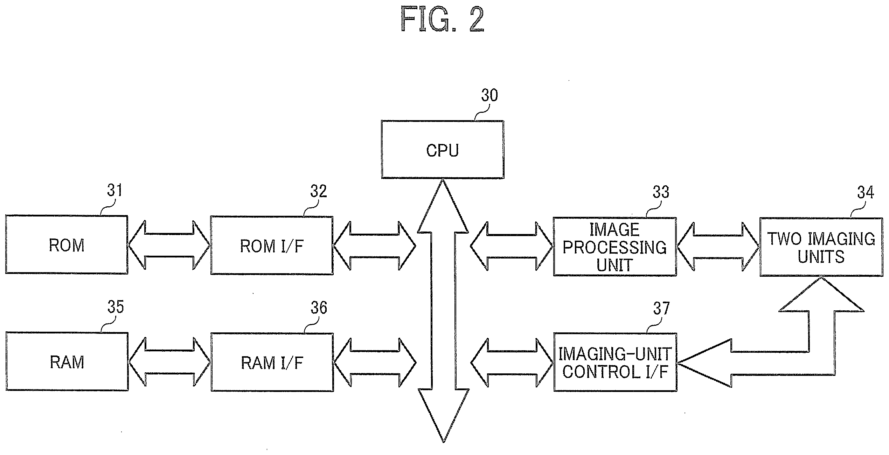

Secondly, an example of the hardware configuration of the stereo camera 10 according to the present example embodiment is described with reference to FIG. 2. The stereo camera 10 according to the present example embodiment includes a central processing unit (CPU) 30, a read only memory (ROM) 31, a ROM interface (I/F) 31, a ROM I/F 32, and an image processing unit 33. Moreover, the stereo camera 10 according to the present example embodiment includes the two imaging units 34, a random access memory (RAM) 35, a RAM I/F 36, and an imaging-unit control I/F 37.

The CPU 30 controls the information processing according to the present example embodiment as a whole. The ROM 31 stores, for example, an information processing program according to the present example embodiment, and may further store a pattern image as will be described later. The ROM I/F 32 is an interface that connects the ROM 31 to other parts including the CPU 30. The image processing unit 33 generates a pattern image or disparity image according to the present example embodiment.

The two imaging units 34 correspond to the imaging units 11 and 12 described above. For example, two imaging units that are separate from each other by prescribed distance are attached to fixtures, and each of the imaging units captures an object. Then, the optical image of the captured image is converted into an analog signal, and outputs image data upon further converting the analog signal into a digital signal. The output image data may be composed of, for example, 8 bits/pixel, with 0 to 255 levels of gradation (brightness value).

The RAM 35 serves as a buffer or cache memory that temporarily stores, for example, a captured image input from the imaging units 34 through the imaging-unit control I/F 37.

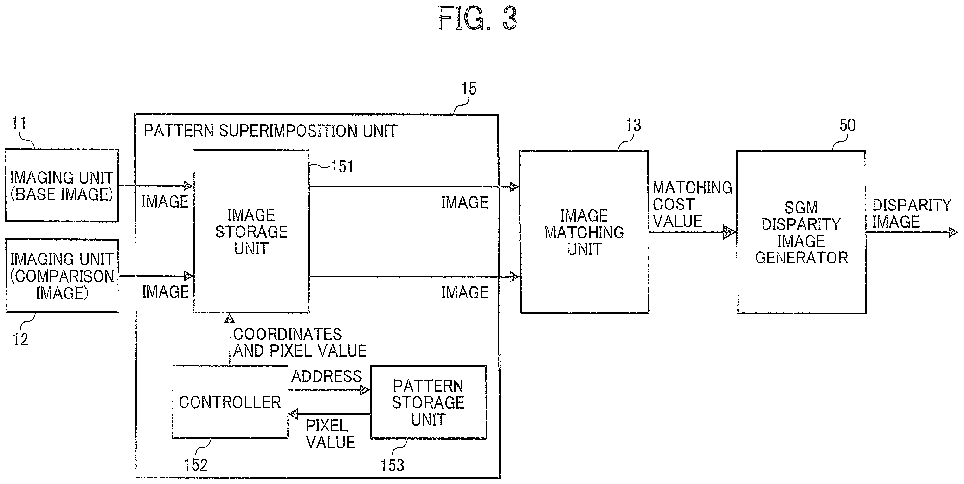

FIG. 3 is a functional block diagram of the information processing device according to an example useful for understanding the present invention . Note that the description of elements similar to those of FIG. 1 will be omitted. Here, the configuration of the pattern superimposition unit 15 is described.

The pattern superimposition unit 15 includes an image storage unit 151, a controller 152, and a pattern storage unit 153. The image storage unit 151 stores the base image obtained from the imaging unit 11, and the comparison image obtained from the imaging unit 12. The pattern storage unit 153 stores the pattern data where coordinates at which a pattern image is to be superimposed and pixel values are preliminarily determined. The controller 152 reads the pattern data stored in the pattern storage unit 153, and sends the coordinates and pixel value of a pixel to be superimposed to the image storage unit 151.

The controller 152 reads the pixel value of a corresponding pixel by converting the coordinates of the background region into the address of the pattern storage unit 153, and sends the coordinates of the background region and the read pixel value to the image storage unit 151 to replace the address of the corresponding coordinates with the sent pixel value.

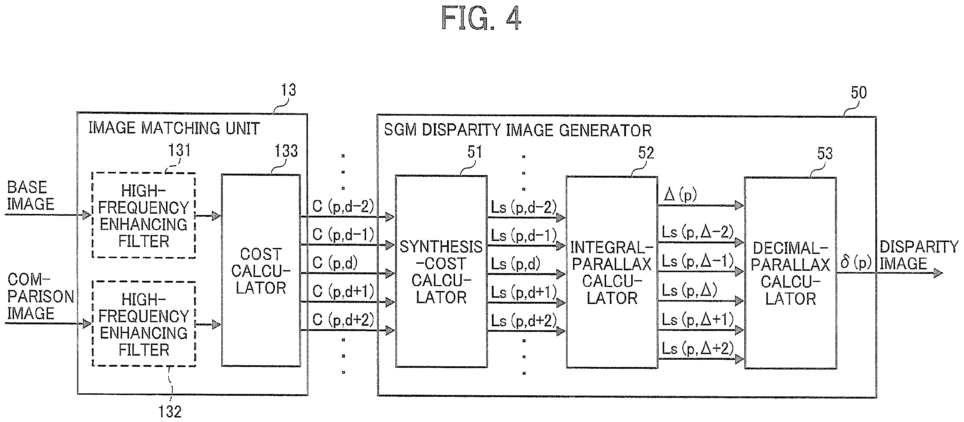

Next, the processing of each of the functional blocks is schematically described. Firstly, the imaging units 11 and 12 obtain images. Then, the pattern superimposition unit 15 superimposes a pattern image B on a portion of the background region, and the image matching unit 13 calculates a cost value C (p, d) (See FIG. 4). Then, the SGM disparity image generator 50 aggregates the cost value C using the SGM algorithms to calculate for every disparity a synthesis-cost value Ls (p, d) that is the sum of path cost values Lr (p, d) from several directions, and calculates an integral disparity and further calculates a decimal disparity (See FIG. 4).

FIG. 4 illustrates the image matching unit 13 and the SGM disparity image generator in detail. The image matching unit 13 includes high-frequency enhancing filters 131 and 132 and a cost calculator 133. The SGM disparity image generator 50 includes a synthesis-cost calculator 51, an integral-disparity calculator 52, and a decimal-disparity calculator 53.

The image matching unit 13 may select any calculation method such as the sum of absolute difference (SAD), the sum of squared difference (SSD), and the normalized cross-correlation (NCC) to calculate the cost value C. The details of the processes of the synthesis-cost calculator 51 and the integral-disparity calculator 52 will be described later.

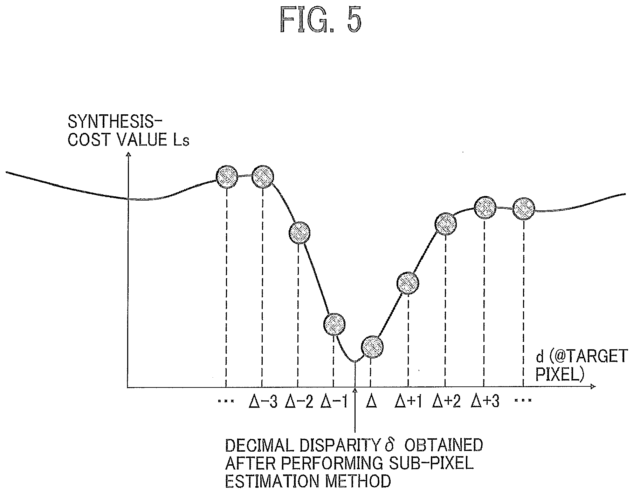

When a disparity is to be calculated to a level of decimal, as illustrated in FIG. 5, the decimal-disparity calculator 53 calculates a decimal disparity $\delta$ using a sub-pixel estimation method. For example, when an equiangular straight line method is used, a decimal disparity $\delta$ may be calculated from three synthesis-cost values Ls that correspond to disparities $\Delta$-1, $\Delta$, and $\Delta$+1.

When a parabolic fitting method or a similar method using a polynomial is used, a decimal disparity $\delta$ may be calculated from the above three synthesis-cost values Ls that correspond to disparities $\Delta$-1, $\Delta$, and $\Delta$+1. Further, a decimal disparity $\delta$ may be calculated from five synthesis-cost values Ls that correspond to disparities $\Delta$-2, $\Delta$-1, $\Delta$, $\Delta$+1, and $\Delta$+2. Alternatively, a decimal disparity $\delta$ may be calculated using a desired sub-pixel estimation method instead of an equiangular straight line method, a parabolic fitting method, and a similar method using a polynomial as described above.

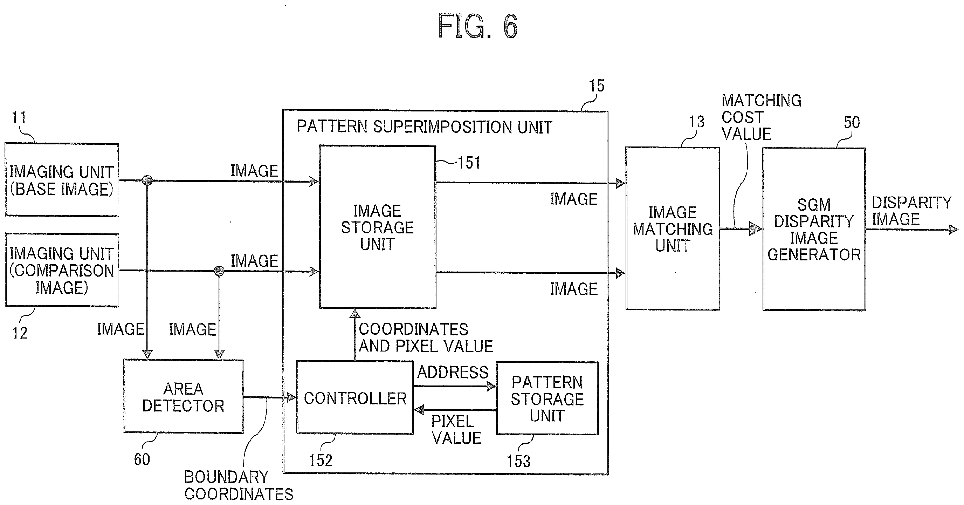

When it is desired that a pattern be superimposed to the boundary between the object area and the background region, boundary coordinate data is calculated and a pattern image is superimposed with reference to the calculated boundary coordinate data. In such cases, an area detector 60 is further provided as illustrated in FIG. 6, and the boundary coordinate data that is obtained by the area detector 60 is sent to the controller 152.

By so doing, the controller 152 can refer to the boundary coordinate data between the object area and the background region. Accordingly, the controller 152 can read from the pattern storage unit 153 only the pattern data that corresponds to the coordinates of the background region. In other words, it becomes no longer necessary for the controller 152 to read from the pattern storage unit 153 the pattern data that corresponds to the other coordinates but the pattern data that corresponds to the coordinates of the background region.

When the area detector 60 detects an object area, an edge-extracted image is derived by extracting the high-frequency components of the base image and comparison image that are obtained by the imaging units 11 and 12, respectively.

In the derivation of such an edge-extracted image, the position of pixels where the pixel values vary in a large amount are determined, for example, by differentiating the neighboring pixels or calculating a difference among the neighboring pixels. The coordinates of the positions of pixels where the pixel value varies in a large amount are extracted as the boundary coordinate data between an object area and a background region, and the portion inside the detected coordinates is determined to be an object area. As an image filter that extracts high-frequency components of an image, for example, Laplacian filter, Prewitt filter, and Sobel filter are known in the art.

In order to clarify the boundary between a background region and object area with a little texture, for example, the sum of the squares of a horizontal gradient edge amount and a vertical gradient edge amount of the Sobel filter, or the square root of the sum are desirably calculated as the pixel value of an edge-extracted image.

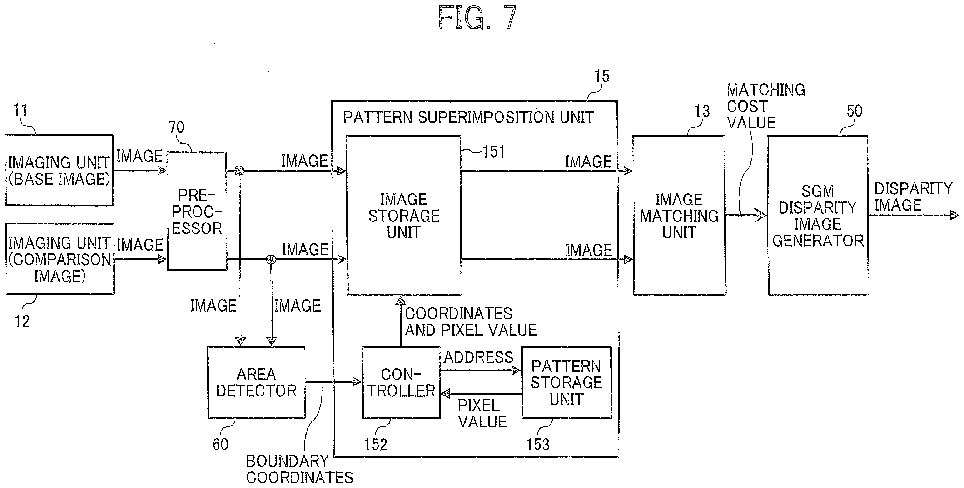

As illustrated in FIG. 7, a preprocessor 70 may further be provided at a position prior to performing pattern superimposition on the image obtained by the imaging units 11 and 12. The preprocessor 70 performs processing such as distortion correction and gamma correction. When a disparity is calculated, the distortion of a base image and a comparison image greatly influences the result of the cost value C calculated by the image matching unit 13, and such an influence affects the SGM disparity image generator 50 in a subsequent stage. It is desired that such an influence be removed as much as possible before image matching is performed.

When the optical axis misalignment of a lens and sensor or the optical deformation of a lens are different between a base image and a comparison image, the preprocessor 70 may retain a distortion correction parameter for correcting such distortion, and a calibration result may be applied to the distortion correction parameter.

The processing that corresponds to each of the blocks described above can be implemented by the hardware configuration illustrated in FIG. 2. The image processing unit 33 that serves as the pattern superimposition unit 15 temporarily stores an input image in the RAM 35 that serves as the image storage unit 151. The coordinates of the stored image is sent to the CPU 30 that serves as the controller 152. The CPU 30 converts the received coordinates into an address, and sends the obtained address to the ROM 31 that serves as the pattern storage unit 153.

The ROM 31 sends the pixel value that corresponds to the received address to the CPU 30. The CPU 30 accesses the address of the RAM 35 according to the coordinates and the received pixel value, and overwrites the pixel value that corresponds to the coordinates at which a pattern image is to be superimposed. After the pixel value that corresponds to the coordinates at which a pattern image is to be superimposed is written into the RAM 35 as described above, a rewritten image is read from the RAM 35. Then, synchronization is performed such that a time lag will not be caused to a horizontal synchronizing signal and a pixel value, and the image is sent to the image matching unit 13.

In the present example embodiment, the captured image that is input to the pattern superimposition unit 15 is temporarily stored in the RAM 35. However, no limitation is indicated thereby, and such a captured image may be temporarily written into a frame buffer as a whole, or the captured image may be temporarily written into a line buffer on a line-by-line basis. The image processing unit 33 may perform some of the instructions that are usually performed by the CPU 30. Note that the processing functions of the image matching unit 13, the SGM disparity image generator 50, the area detector 60, and the preprocessor 70 are implemented by the RAM 35 and the image processing unit 33.

[Principles of Distance Measuring]

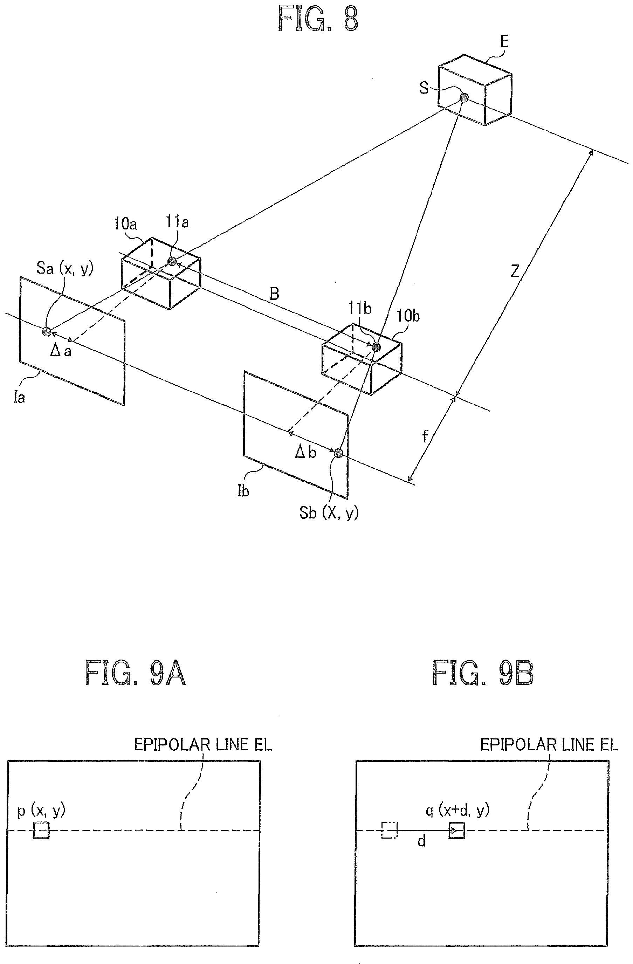

The principles of distance measuring according to the present example embodiment are described with reference to FIG. 8. Here, the principles of measuring the distance between a stereo camera and an object using a disparity value, which indicates a disparity between the stereo camera and the object derived, for example, by using a stereo imaging, are described. FIG. 8 is a schematic diagram of the principles of deriving the distance between an imaging device and an object, according to the present example embodiment. For the purpose of simplification, the principles of distance measuring will be described below on a pixel-by-pixel basis, instead of describing the principles of distance measuring for a specified area.

[Calculation of Disparity Value]

The images that are captured by the imaging device 10a and the imaging device 10b are referred to as a base image Ia and a comparison image Ib, respectively. In FIG. 8, it is assumed that the imaging device 10a and the imaging device 10b are arranged in parallel. In FIG. 8, a point S on an object E, which is in a three-dimensional space, is mapped at positions of the imaging device 10a and the imaging device 10b that are on the same horizontal line.

Accordingly, the point S of each image is captured at a point Sa (x, y) of the base image Ia and a point Sb (X, y) of the comparison image Ib, respectively. A disparity value $\Delta$ is calculated as in the following equation using the point Sa (x, y) on the coordinates of the imaging device 10a and the point Sb (X, y) on the coordinates of the imaging device 10b.

$$\Delta = X - x \qquad [\text{Equation 1}]$$

Assuming that the distance between the point Sa (x, y) of the base image Ia and the point of intersection of the perpendicular line drawn from an imaging lens 11a to the imaging plane is $\Delta$a and the distance between the point Sb (X, y) of the comparison image Ib and the point of intersection of the perpendicular line drawn from an imaging lens 11b to the imaging plane is $\Delta$b, the disparity value $\Delta$ is calculated as in the following equation.

$$\Delta = \Delta a + \Delta b$$

[Distance Calculation]

By using the disparity value $\Delta$, the distance Z between the imaging devices 10a and 10b and the object E can be derived. More specifically, the distance Z indicates the distance between a plane including the focal points of the imaging lens 11a and the imaging lens 11b and the specified point S of the object E.

By using focal length f of the imaging lens 11a and the imaging lens 11b, base-line length B indicating the distance between the imaging lens 11a and the imaging lens 11b, and the disparity value $\Delta$ illustrated in FIG. 8, the distance Z is calculated as in the following equation.

$$Z = (B * f) / \Delta \qquad [\text{Equation 2}]$$

According to Equation 2 as above, the distance Z becomes smaller as the disparity value Δ is greater, and the distance Z becomes greater as the disparity value Δ is smaller.

[SGM]

Next, a method of measuring distances using the SGM, which is adopted in the present example embodiment, will be described with reference to FIGS. 9A and 9B, FIG. 10, FIG. 11, and FIG. 12. The SGM is adopted to precisely derive the disparity value even from an object with a little texture. Because it is possible to express the detailed information of an object with a little texture or the like, precise distance measuring is achieved.

In the SGM, a disparity value is not calculated immediately after a cost value that indicates the degree of dissimilarity is calculated. Instead, a synthesis-cost value that indicates the degree of dissimilarity in synthesis is further calculated after the cost value is calculated to derive a disparity value. By so doing, a disparity image in which the disparity values are obtained for all the pixels is finally derived. Although the SGM is adopted in the present example embodiment, any other methods may be adopted as long as the disparity values of all the pixels are finally derived based on the calculation result of the cost values of peripheral pixels.

[Calculation of Cost Value]

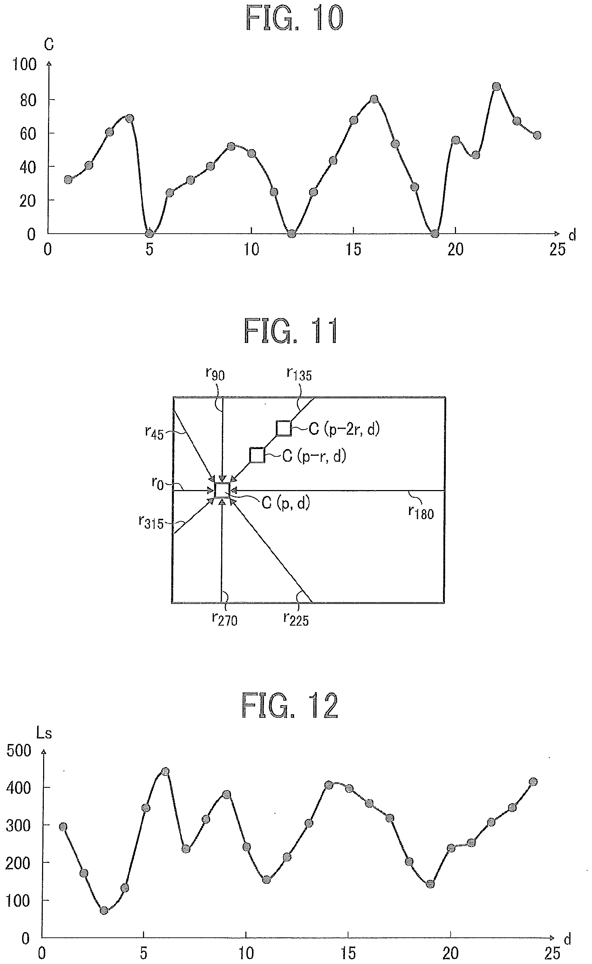

Firstly, a method of calculating a cost value C (p, d) is described with reference to FIGS. 9A and 9B and FIG. 10. FIG. 9A is a diagram in which a reference pixel is indicated on a base image. FIG. 9B is a diagram in which an amount of shift (i.e., amount of displacement) is calculated while sequentially shifting a candidate pixel on a comparison image that corresponds to the reference pixel of FIG. 9A. FIG. 10 is a graph in which the cost value is indicated for each degree of the amount of shift, according to the present embodiment. Here, the corresponding pixel indicates a pixel of a comparison image that is most similar to the reference pixel of a base image.

As illustrated in FIG. 9A, the cost values C (p, d) for a plurality of candidate pixels q (x+d, y) that correspond to a prescribed reference pixel p (x, y) on a base image are calculated according to the brightness values of the reference pixel p (x, y) and the candidate pixels q (x+d, y) on an epipolar line that corresponds to the reference pixel p (x, y) on the comparison image. "d" in FIG. 9B indicates the amount of shift (i.e. amount of displacement) of the candidate pixel q that corresponds to the reference pixel p. In the present example embodiment, the amount of shift is indicated on a pixel-by-pixel basis.

In other words, the cost values C (p, d) that indicate the degree of dissimilarity in brightness value between the candidate pixels q (x+d, y) and the reference pixel p (x, y) are calculated while sequentially shifting the candidate pixels q (x+d, y) on a pixel-by-pixel basis within a prescribed range (for example, 0<d<25), as illustrated in FIGS. 9A and 9B.

As illustrated in FIG. 10, the cost values C (p, d) as calculated above can be illustrated in a graph for each degree of amount of shift "d". As illustrated in FIG. 10, the cost value becomes zero when the amount of shift "d" is 5, 12, and 19, and thus a minimum value cannot be calculated. As described above, it is difficult to obtain a minimum value for the cost value C when an object with a little texture is observed.

[Calculation of Synthesis-cost Value]

Secondly, a method of calculating synthesis-cost values Ls (p, d) is described with reference to FIG. 11 and FIG. 12. The synthesis-cost value according to the present example embodiment may be calculated using, for example, the SGM. In addition to the calculation of the cost values C (p, d), the cost values calculated for a plurality of reference pixels around the prescribed reference pixel p (x, y) are aggregated with the cost values C (p, d) to calculate a synthesis-cost value Ls (p, d).

Next, the method of calculating a synthesis-cost value is described in detail. Firstly, path cost values Lr (p, d) are calculated prior to calculating a synthesis-cost value Ls (p, d). The path cost values Lr (p, d) are calculated as in the following equation.

$$Lr\ (p,\ d) = C\ (p,\ d) + \min\{Lr\ (p\text{-}r,\ d),\ Lr\ (p\text{-}r,\ d\text{-}1) + P1,\ Lr\ (p\text{-}r,\ d\text{+}1) + P1,\ \min_d(Lr\ (p\text{-}r,\ d) + p2\}\qquad [\text{Equation 3}]$$

In Equation 3, "r" indicates a directional vector of aggregation, and includes the two components of x-direction and y-direction. "min{}" is a function to calculate a minimum value. As illustrated in Equation 3, "Lr" is recursively used. "$\min_d(Lr\ (p\text{-}r,\ d))$" indicates the minimum value of Lr (p-r, d) when the amount of shift "d" is varied in the coordinates where "p" is shifted to "r" by one pixel. "PI" and "P2" are fixed parameters that are determined in advance by experiment.

"Pl" and "P2" are designed such that the disparity values Δ of the neighboring reference pixels on a path become consecutive.

As illustrated in Equation 3, Lr (p, d) are calculated by adding minimum values for the path cost values Lr of pixels in r directions illustrated in FIG. 11 to the cost value C for the reference pixel p (x, y). Because Lr are calculated for a plurality of pixels in r directions as described above, Lr for the end pixels in r directions of the base image p (x, y) are firstly calculated and then Lr for the other pixels are calculated in r directions.

Then, as illustrated in FIG. 11, $Lr_0$, $Lr_{45}$, $Lr_{90}$, $Lr_{135}$, $Lr_{180}$, $Lr_{225}$, $Lr_{270}$, and $Lr_{315}$ in eight directions are obtained, and a synthesis-cost value Ls is finally calculated as in the following equation.

$$Ls\ (p,\ d) = \Sigma_r \{Lr\ (p,\ d)\} \qquad [\text{Equation 4}]$$

As illustrated in FIG. 12, the synthesis-cost values Ls (p, d) as calculated above can be illustrated in a graph for each degree of amount of shift "d". As illustrated in FIG. 12, the synthesis-cost value has the minimum value when the amount of shift "d" is 3. Accordingly, it can be calculated as disparity value Δ=3. In the example embodiment described above, the number of the channels of "r" is eight. However, no limitation is indicated thereby, and the number of the channels of "r" may be, for example, six or sixteen.

[Pattern Superimposition]

Next, a pattern superimposition according to the present example embodiment is described in detail. In the SGM, matching cost values C (p, d) whose values vary to the utmost for every disparity are aggregated for each path to obtain a synthesis-cost value Ls (p, d). By so doing, a precise disparity can be obtained. For this reason, it is ideal to aggregate cost values from directions where a prescribed image pattern is arranged.

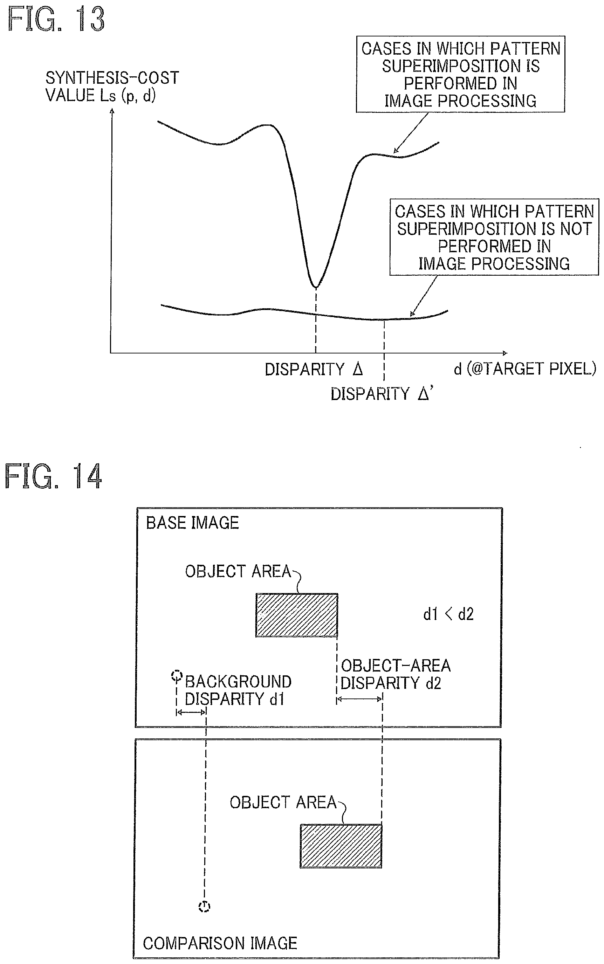

When cases in which a pattern image is superimposed on an area such as a background region where the pattern image does not overlap with the captured area of an object in the image processing are compared with cases in which a pattern image is not superimposed on a background region as illustrated in FIG. 13, the contrast in the obtained synthesis-cost values Ls (p, d) becomes greater in the former cases in which a pattern image is superimposed on a background region in the image processing. Accordingly, it is easier to precisely determine a disparity value Δ of a target pixel.

When only a little texture is present and matching is performed without superimposing a pattern image, it is difficult for the synthesis-cost values Ls (p, d), which is obtained in the computation of SGM algorithms, to have a large contrast. For this reason, even if a minimum value is obtained for disparity Δ' as illustrated in FIG. 13, such a disparity Δ' has low reliability and significantly deviates from the correct disparity. In such cases, even a disparity in the entire background is inconstant as illustrated in FIG. 21, and only an undesired imprecise disparity image is generated.

As described above, the disparity data of the pixels of parts on an image can precisely be calculated by superimposing a pattern image on a background region of the image. Moreover, omission of the disparity data of the pixels of parts on an image can be prevented due to the use of the SGM according to the present example embodiment. As omission of disparity data is prevented, the parts-data recognition accuracy improves in object recognition processes in a subsequent stage.

FIG. 14 is a schematic diagram of a background disparity that is calculated by the pickup system 1 in advance, according to the present example embodiment. As illustrated in FIG. 8, the distance Z between a stereo camera and a background region in a factory pickup system is known in advance. This is because a background disparity d1 can be calculated in advance as in the following equation.

Background Disparity d1=[Base-line Length]* [Distance between Lens and Sensor Surface]/[Distance Z]

Accordingly, it is possible to superimpose a pattern image on a background region.

Note that it is desired that a pattern image to be superimposed onto a background region of a comparison image be displaced relative to a pattern image to be superimposed onto a background region of a base image, by a background disparity d1 that can be calculated in advance. In other words, the pattern superimposition unit 15 according to the present example embodiment shifts a pattern image to be superimposed on a comparison image by certain distance, relative to a prescribed reference position on the comparison image. Note that d2 in FIG. 14 indicates an object-area disparity.

A pattern image to be superimposed on a background region is not necessarily arranged all over the background region, but may be arranged as desired in view of the number of pixels, a pitch, a random number, or the like. However, for example, a pattern with repeated cycles is undesired because the cost value C may be repeated.

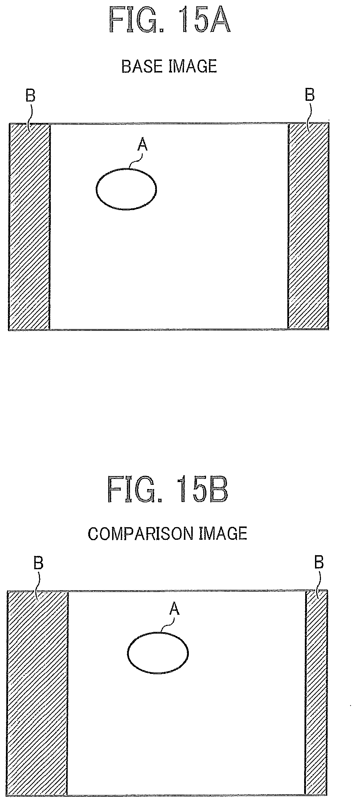

Regarding a pattern image to be superimposed, a pattern image B may be superimposed on right and left sides only as illustrated in FIGS. 15A and 15B, or a pattern image may be superimposed on the top and bottom sides and the right and left sides. Alternatively, a pattern image may be superimposed to the boundary between the object area and the background region. Note that "A" in FIG. 15 indicates a captured image of a certain object.

The SGM is effective when a pattern without repeated cycles is used, and is more effective when a pattern is extensive all over the image. Accordingly, it is desired that a pattern without repeated cycles, for example, random numbers having various types of frequency components, be superimposed to the boundary between the object area and the background region.

[Arrangement of Parts]

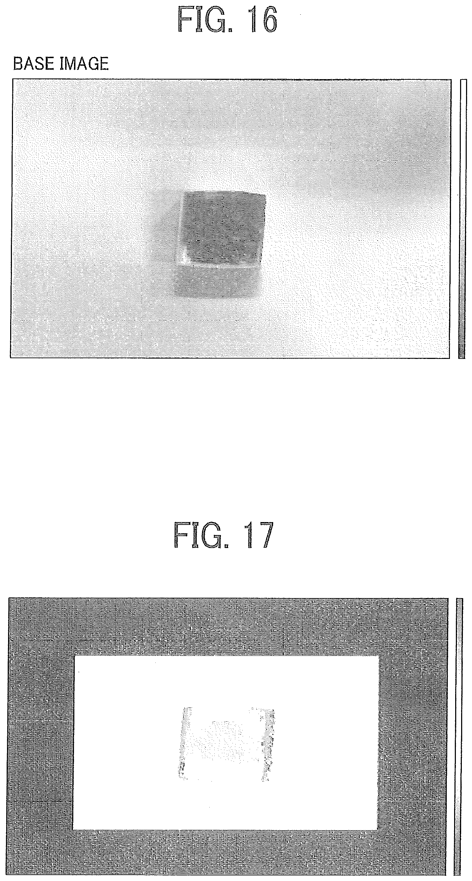

Next, concrete examples to which the technology according to the present example embodiment is applied are described below with reference to FIG. 16 and FIG. 17. Firstly, it is assumed that the image of large black threads, which are made of metal and are loaded in bulk in a box, that are captured by the imaging unit 11 of the stereo camera 10 is a base image in the parts pickup system illustrated in FIG. 1 (see FIG. 16). In FIG. 16, the size of the image is 960*1280 pixels (length*width). The large black threads, which are made of metal and are loaded in bulk in a box, are arranged such that one of the threads on the frontest side is at the coordinates (x, y) = (630, 450).

It is assumed that the distance between the imaging unit 11 and the background, the distance between the imaging unit 11 and an edge of the box, and the distance between the imaging unit 11 and the closest large black thread are 0.973 m, 0.908 m, and 0.928 m, respectively. Accordingly, the correct disparities that are expected to be obtained by the stereo camera 10 are 63 pixels, 82 pixels, and 76 pixels for the background, the edge of the box, and the closest large black thread, respectively.

[Operation of Stereo Camera]

The stereo camera 10 is operated to superimpose a pattern image on the background of the image of large black threads, which are made of metal and are loaded in bulk in a box, by performing image processing. Then, the disparity of the threads is calculated by executing an SGM algorithm. The superimposition of a pattern image is performed on both sides of the background region as illustrated in FIGS. 15A and 15B.

As a result, the correct disparities of 63 pixels, 82 pixels, and 76 pixels are obtained for the background, the edge of the box, and the closest large black thread, respectively (see FIG. 17). Moreover, the parts disparities inside the box are stable without omission of the disparity data of the pixels of parts on an image.

[Operation of Pickup System]

Then, the arm is controlled by the arm controller 40, and the closest large black thread at the coordinates of (x, y)=(630, 450) can be picked up by the end portions of the arm.

In other words, according to the present example embodiment, a disparity image is obtained based on a captured image on which a pattern image that is calculated in advance in internal processing has been superimposed, instead of emitting pattern light on an object as in the prior art. Accordingly, a disparity can be obtained as desired, and reduction in the recognition accuracy of the information of an object such as components used for picking can be prevented. In other words, the arm controller 40 can precisely control the arm so as to pick up parts.

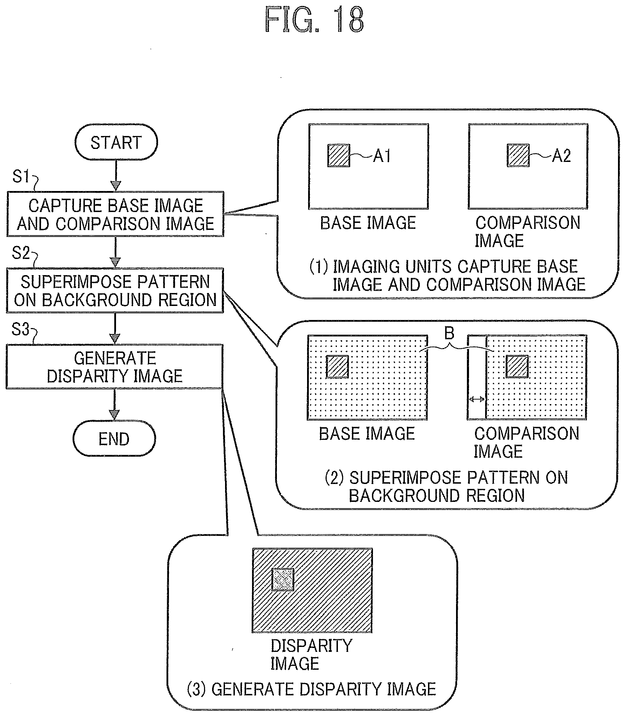

FIG. 18 is a flowchart of the processing according to the present example embodiment. Firstly, as described above, the imaging unit 11 captures a base image, and the imaging unit 12 captures a comparison image (step S1). In FIG. 18, A1 and A2 both indicate the captured images of specified parts.

Secondly, the pattern superimposition unit 15 superimposes a pattern image B on a portion of the background region such that the pattern image B does not overlap with the captured image of the parts (step S2). In the present example embodiment, a pattern image is superimposed to the boundary between the background region and the parts area.

Then, the disparity image generator 14 generates a disparity image based on a captured image on which a pattern image is superimposed (step S3).

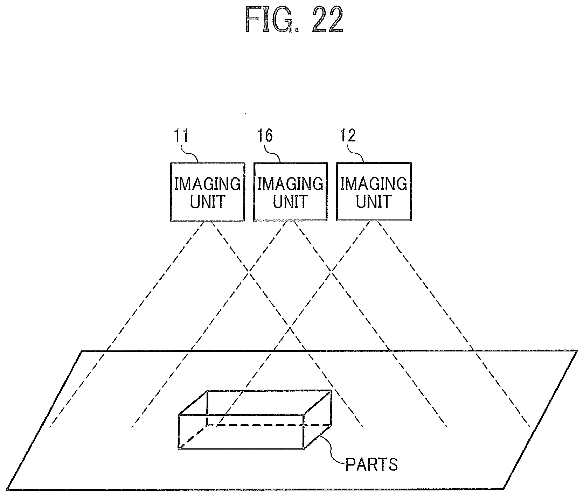

In the example embodiments described above, cases of two imaging units were described. However, no limitation is indicated thereby. For example, there may be three ore more imaging units. FIG. 22 is a magnified view of a case where the stereo camera is provided with three imaging units, according to an example embodiment of the present invention. As illustrated in FIG. 22, an imaging unit 16 may further be provided. When the dimension of the parts is long in the base-line length direction of the stereo camera, two of the three imaging units 11, 12, and 16 may be selected as appropriate to capture images from the selected two imaging units, respectively. For example, as illustrated in FIG. 22, there are some cases in which an entire image of the parts cannot be captured by both of the imaging unit 11 and the imaging unit 12. In such cases, two entire images are captured by the imaging unit 11 and the imaging unit 16.

According to the present example embodiment, it is not necessary to provide an external device such as a conventional pattern light emitter. Accordingly, an increase in the size of system can be prevented, and the manufacturing cost and the total man-hour to manufacture systems can be reduced.

Note that the embodiments described above are preferred example embodiments of the present invention, and various applications and modifications may be made without departing from the scope of the invention. Further, any of the above-described processes performed by the information processing device according to the present example embodiment can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage media include, but are not limited to, flexible disk, hard disk, optical discs, magneto-optical discs, magnetic tapes, nonvolatile memory cards, ROM (read-only-memory), etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

Further, the computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device, as described above.

Numerous additional modifications and variations are possible in light of the above teachings. It is therefore to be understood that within the scope of the appended claims, the disclosure of the present invention may be practiced otherwise than as specifically described herein.

**Claims**

1. Apparatus (10) comprising two imaging units (11, 12) configured to capture an object to obtain two captured images, said apparatus configured to process the two captured images from the object, and to superimpose a pattern image on a portion of each captured image where a captured area of the object does not overlap with the pattern image, and to generate a disparity image of the object based on the two captured images on which the pattern image is superimposed,
   the information processing apparatus (10) comprising an area detector configured to detect the object area and the background wherein the apparatus is configured to superimpose the pattern image on at least a portion of the background detected by the area detector; and
   wherein the two said imaging units are separated by a base-line length, and the apparatus is configured to shift the pattern image to be superimposed on one of the two captured images with reference to the pattern image to be superimposed on another one of the two captured images by a prescribed distance, and
   the prescribed distance is determined based on the base-line length and a distance between the imaging units (11, 12) and the background.

2. Apparatus (10) according to claim 1, configured to calculate a disparity value of each pixel in the captured images based on cost values calculated for a prescribed reference pixel and a plurality of reference pixels around the prescribed reference pixel.

3. Apparatus (10) according to claim 1 or claim 2, wherein the two captured images include at least a base image captured by one of the two imaging units (11, 12), and a comparison image captured by another one of the two imaging units (11, 12) that is separate from the one of the imaging units (11, 12) by the base-line length.

4. Apparatus (10) according to claim 3, configured to shift the pattern image to be superimposed on the comparison image by a certain distance, relative to a prescribed reference position on the comparison image, before superimposing the pattern image.

5. Apparatus (10) according to any one of claims 1 to 4, further comprising: an area detector (60) configured to detect a captured area of the object on each of the captured images,
   wherein the apparatus is configured to superimpose the pattern image on the two captured images based on the result of detection performed by the area detector (60).

6. Apparatus (10) according to any one of claims 1 to 4, further comprising: a storage unit (153) configured to store the pattern image.

7. Apparatus (10) according to claim 5, further comprising: a controller (152) configured to read the pattern image from the storage unit (153) on a pixel-by-pixel basis and to send the read pattern image to the pattern superimposition unit (15) on a pixel-by-pixel basis.

8. Apparatus according to claim 1, configured to superimpose the pattern image on an area that is determined to be the background.

9. A system for picking up parts, comprising the imaging device (10) of any one of claims 1 to 8.

10. An information processing method comprising:

storing in a storage unit (153) two captured images obtained by capturing an object by two imaging units (11, 12) separated by a base-line length;
shifting a pattern image to be superimposed on one of the two captured images with reference to the pattern image to be superimposed on another one of the two captured images by a prescribed distance, wherein the prescribed distance is determined based on the base-line length and a distance between the imaging units (11, 12) and the background;
superimposing the pattern image on a portion of each captured image where a captured area of the object does not overlap with the pattern image, and
generating a disparity image of the object based on the two captured images on which the pattern image is superimposed, wherein the method further comprises:

detecting the object area and the background, and
superimposing the pattern image on a least a portion of the background detected.

11. A carrier means carrying computer readable code for controlling one or more controllers to carry out the method of claim 10.

**Patentansprüche**

1. Vorrichtung (10), umfassend zwei Bildgebungseinheiten (11, 12), konfiguriert zum Erfassen eines Objekts, um zwei erfasste Bilder zu erhalten, wobei die Vorrichtung konfiguriert ist zum Verarbeiten der zwei erfassten Bilder von dem Objekt und zum Überlagern eines Musterbilds auf einem Abschnitt jedes erfassten Bilds, wobei ein erfasster Bereich des Objekts nicht mit dem Musterbild überlappt, und zum Erzeugen eines Disparitätsbilds des Objekts basierend auf den zwei erfassten Bildern, auf denen das Musterbild überlagert ist,
die Informationsverarbeitungsvorrichtung (10) umfassend einen Bereichsdetektor, konfiguriert zum Detektieren des Objektbereichs und des Hintergrunds, wobei die Vorrichtung konfiguriert ist zum Überlagern des Musterbilds auf mindestens einen Abschnitt des durch den Bereichsdetektor detektierten Hintergrunds; und
wobei die zwei Bildgebungseinheiten durch eine Grundlinienlänge getrennt sind und die Vorrichtung konfiguriert ist zum Verlagern des Musterbilds, das auf einem der zwei erfassten Bilder zu überlagern ist, unter Bezugnahme auf das Musterbild, das auf einem anderen der zwei erfassten Bilder zu überlagern ist, um eine vorgegebene Distanz, und die vorgegebene Distanz basierend auf der Grundlinienlänge und einer Distanz zwischen den Bildgebungseinheiten (11, 12) und dem Hintergrund bestimmt wird.

2. Vorrichtung (10) nach Anspruch 1, konfiguriert zum Berechnen eines Disparitätswerts jedes Bildpunkts in den erfassten Bildern basierend auf Kostenwerten, berechnet für einen vorgegebenen Referenzbildpunkt und eine Vielzahl von Referenzbildpunkten um den vorgegebenen Referenzbildpunkt.

3. Vorrichtung (10) nach Anspruch 1 oder Anspruch 2, wobei die zwei erfassten Bilder mindestens ein Basisbild, erfasst durch eine der zwei Bildgebungseinheiten (11, 12), und ein Vergleichsbild, erfasst durch eine andere der zwei Bildgebungseinheiten (11, 12), das von der einen der Bildgebungseinheiten (11, 12) um die Grundlinienlänge getrennt ist, enthalten.

4. Vorrichtung (10) nach Anspruch 3, konfiguriert zum Verlagern des Musterbilds, das auf dem Vergleichsbild zu überlagern ist, um eine bestimmte Distanz relativ zu einer vorgegebenen Referenzposition auf dem Vergleichsbild vor dem Überlagern des Musterbilds.

5. Vorrichtung (10) nach einem der Ansprüche 1 bis 4, ferner umfassend: einen Bereichsdetektor (60), konfiguriert zum Detektieren eines erfassten Bereichs des Objekts auf jedem der erfassten Bilder,
wobei die Vorrichtung konfiguriert ist zum Überlagern des Musterbilds auf den zwei erfassten Bildern basierend auf dem Ergebnis der durch den Bereichsdetektor (60) durchgeführten Detektion.

6. Vorrichtung (10) nach einem der Ansprüche 1 bis 4, ferner umfassend: eine Speichereinheit (153), konfiguriert zum Speichern des Musterbilds.

7. Vorrichtung (10) nach Anspruch 5, ferner umfassend: eine Steuerung (152), konfiguriert zum Lesen des Musterbilds aus der Speichereinheit (153) auf einer Bildpunkt-pro-Bildpunkt-Basis und zum Senden des gelesenen Musterbilds an die Musterüberlagerungseinheit (15) auf einer Bildpunkt-pro-Bildpunkt-Basis.

8. Vorrichtung nach Anspruch 1, konfiguriert zum Überlagern des Musterbilds auf einem Bereich, der als Hintergrund bestimmt wird.

9. System zum Aufnehmen von Teilen, umfassend die Bildgebungsvorrichtung (10) nach einem der Ansprüche 1 bis 8.

10. Informationsverarbeitungsverfahren, umfassend:

Speichern, in einer Speichereinheit (153), von zwei erfassten Bildern, erhalten durch Erfassen eines Objekts durch zwei Bildgebungseinheiten (11, 12), die um eine Grundlinienlänge getrennt sind;
Verlagern eines Musterbilds, das auf einem der zwei erfassten Bilder zu überlagern ist, unter Bezugnahme auf das Musterbild, das auf ein anderes der zwei erfassten Bilder zu überlagern ist, um eine vorgegebene Distanz, wobei die vorgegebene Distanz basierend auf der Grundlinienlänge und einer Distanz zwischen den Bildgebungseinheiten (11, 12) und dem Hintergrund bestimmt wird;
Überlagern des Musterbilds auf einem Abschnitt jedes erfassten Bilds, wobei ein erfasster Bereich des Objekts nicht mit dem Musterbild überlappt, und
Erzeugen eines Disparitätsbilds des Objekts basierend auf den zwei erfassten Bildern, auf die das Musterbild überlagert wird, wobei das Verfahren ferner umfasst:

Detektieren des Objektbereichs und des Hintergrunds und
Überlagern des Musterbilds auf mindestens einen Abschnitt des detektierten Hintergrunds.

11. Trägermittel, das computerlesbaren Code zum Steuern einer oder mehrerer Steuerungen zum Ausführen des Verfahrens nach Anspruch 10 trägt.

**Revendications**

1. Appareil (10) comprenant deux unités d'imagerie (11, 12) configurées afin de capturer un objet afin d'obtenir deux images capturées, ledit appareil étant configuré afin de traiter les deux images capturées à partir de l'objet et afin de superposer une image de motif sur une partie de chaque image capturée, dans laquelle une zone capturée de l'objet ne recouvre pas l'image de motif, et afin de générer une image de disparité de l'objet, sur la base des deux images capturées sur lesquelles l'image de motif est superposée,
l'appareil de traitement d'informations (10) comprenant un détecteur de zone configuré afin de détecter la zone de l'objet et le fond, dans lequel l'appareil est configuré afin de superposer l'image de motif sur au moins une partie du fond, détecté par le détecteur de zone ; et
dans lequel les deux unités d'imagerie sont séparées par une longueur de ligne de base et l'appareil est configuré afin de déplacer l'image de motif à superposer sur une des deux images capturées relativement à l'image de motif à superposer sur une autre des deux images capturées sur une distance prescrite, et
la distance prescrite est déterminée sur la base de la longueur de ligne de base et d'une distance entre les unités d'imagerie (11, 12) et le fond.

2. Appareil (10) selon la revendication 1, configuré afin de calculer une valeur de disparité de chaque pixel dans les images capturées sur la base des valeurs de coût calculées pour un pixel de référence prescrit et une pluralité de pixels de référence autour du pixel de référence prescrit.

3. Appareil (10) selon la revendication 1 ou la revendication 2, dans lequel les deux images capturées incluent au moins une image de base capturée par une des deux unités d'imagerie (11, 12) et une image de comparaison capturée par une autre des deux unités d'imagerie (11, 12) qui est séparée de l'une des unités d'imagerie (11, 12) par la longueur de ligne de base.

4. Appareil (10) selon la revendication 3, configuré afin de déplacer l'image de motif à superposer sur l'image de comparaison sur une certaine distance, relativement à une position de référence prescrite sur l'image de comparaison, avant de superposer l'image de motif.

5. Appareil (10) selon l'une quelconque des revendications 1 à 4, comprenant en outre un détecteur de zone (60) configuré afin de détecter une zone capturée de l'objet sur chacune des images capturées,
dans lequel l'appareil est configuré afin de superposer l'image de motif sur les deux images capturées sur la base du résultat de la détection réalisée par le détecteur de zone (60).

6. Appareil (10) selon l'une quelconque des revendications 1 à 4, comprenant en outre : une unité de stockage (153) configurée afin de stocker l'image de motif.

7. Appareil (10) selon la revendication 5, comprenant en outre : un système de commande (152) configuré afin de lire l'image de motif provenant de l'unité de stockage (153) sur une base pixel-par-pixel et afin d'envoyer l'image de motif lue à l'unité de superposition de motif (15) sur une base pixel-par-pixel.

8. Appareil selon la revendication 1, configuré afin de superposer l'image de motif sur une zone qui est déterminée comme étant le fond.

9. Système permettant de prélever des pièces, comprenant le dispositif d'imagerie (10) selon l'une quelconque des revendications 1 à 8.

10. Procédé de traitement de l'information comprenant :

   le stockage dans une unité de stockage (153) de deux images capturées obtenues en capturant un objet par deux unités d'imagerie (11, 12) séparées par une longueur de ligne de base ;
   le déplacement d'une image de motif à superposer sur une des deux images capturées en se référant à l'image de motif à superposer sur une autre des deux images capturées sur une distance prescrite, dans lequel la distance prescrite est déterminée sur la base de la longueur de ligne de base et d'une distance entre les unités d'imagerie (11, 12) et le fond ;
   la superposition de l'image de motif sur une partie de chaque image capturée lorsqu'une zone capturée de l'objet ne recouvre pas l'image de motif, et
   la génération d'une image de disparité de l'objet sur la base des deux images capturées sur lesquelles l'image de motif est superposée, dans lequel le procédé comprend en outre :

      la détection de la zone d'objet et du fond, et
      la superposition de l'image de motif sur au moins une partie du fond détecté.

11. Moyen de support portant un code lisible sur ordinateur permettant de commander un ou plusieurs dispositifs) de commande afin de réaliser le procédé selon la revendication 10.

# FIG. 1

EP 2 953 096 B1

PARTS PICKUP SYSTEM 1

**STEREO CAMERA** 10

BRIGHTNESS IMAGE

20 RECOG-NITION UNIT

IMAGE

11 IMAGING UNIT

12 IMAGE IMAGING UNIT

PATTERN SUPER-IMPOSITION UNIT 15

IMAGE

IMAGE

IMAGE MATCHING UNIT 13

MATCHING COST VALUE

DISPARITY IMAGE GENERATOR 14

DISPARITY IMAGE

PARTS

40 ARM CONTROLLER

RESULT OF OBJECT RECOGNITION

FIG. 2

# FIG. 3

## FIG. 4

FIG. 5

SYNTHESIS-
COST VALUE Ls

d (@TARGET
PIXEL)

$\cdots$ $\Delta-3$ $\Delta-2$ $\Delta-1$ $\Delta$ $\Delta+1$ $\Delta+2$ $\Delta+3$ $\cdots$

DECIMAL DISPARITY $\delta$ OBTAINED
AFTER PERFORMING SUB-PIXEL
ESTIMATION METHOD

# FIG. 6

EP 2 953 096 B1

# FIG. 7

EP 2 953 096 B1

FIG. 8

FIG. 9A

EPIPOLAR LINE EL

p (x, y)

FIG. 9B

EPIPOLAR LINE EL

q (x+d, y)

d

FIG. 10

FIG. 11

FIG. 12

# FIG. 13

SYNTHESIS-COST
VALUE Ls (p, d)

CASES IN WHICH PATTERN
SUPERIMPOSITION IS
PERFORMED IN
IMAGE PROCESSING

CASES IN WHICH PATTERN
SUPERIMPOSITION IS NOT
PERFORMED IN
IMAGE PROCESSING

DISPARITY Δ

DISPARITY Δ'

d (@TARGET PIXEL)

# FIG. 14

BASE IMAGE

OBJECT AREA

d1 < d2

BACKGROUND
DISPARITY d1

OBJECT-AREA
DISPARITY d2

OBJECT AREA

COMPARISON IMAGE

# FIG. 15A

BASE IMAGE

# FIG. 15B

COMPARISON IMAGE

# FIG. 16

BASE IMAGE

# FIG. 17

# FIG. 18

START

S1 → CAPTURE BASE IMAGE AND COMPARISON IMAGE

S2 → SUPERIMPOSE PATTERN ON BACKGROUND REGION

S3 → GENERATE DISPARITY IMAGE

END

A1

BASE IMAGE

A2

COMPARISON IMAGE

(1) IMAGING UNITS CAPTURE BASE IMAGE AND COMPARISON IMAGE

B

BASE IMAGE

COMPARISON IMAGE

(2) SUPERIMPOSE PATTERN ON BACKGROUND REGION

DISPARITY IMAGE

(3) GENERATE DISPARITY IMAGE

# FIG. 19
## PRIOR ART

PARTS PICKUP SYSTEM 500

# FIG. 20
## PRIOR ART

REFLECTION OF LIGHT EMITTED
FROM PATTERN LIGHT EMITTER

BASE IMAGE

# FIG. 21
## PRIOR ART

ADVERSE EFFECT ON RESULT
OF DISPARITY CALCULATION
CAUSED BY REFLECTION OF LIGHT

SGM DISPARITY IMAGE

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013190394 A
- US 6137491 A
- US 2010091301 A